# EUROPÄISCHE PATENTSCHRIFT

(11) **EP 4 197 091 B1**
(45) Veröffentlichungstag und Bekanntmachung des Hinweises auf die Patenterteilung: **17.01.2024**
(21) Anmeldenummer: 20799672.9
(22) Anmeldetag: 28.10.2020
(51) Int. Cl.: H02K 15/02, H02K 1/278

(54) **VERFAHREN UND VORRICHTUNG ZUM FÜGEN EINER ARMIERUNGSHÜLSE AUF EINEN ROTOR EINES ELEKTROMOTORS**
METHOD AND DEVICE FOR JOINING A REINFORCEMENT SLEEVE ON A ROTOR OF AN ELECTRIC MOTOR
PROCÉDÉ ET DISPOSITIF D'ASSEMBLAGE D'UN MANCHON DE RENFORT SUR UN ROTOR DE MOTEUR ÉLECTRIQUE

(43) Veröffentlichungstag der Anmeldung: 21.06.2023
(73) Patentinhaber: Schunk Kohlenstofftechnik GmbH, 35452 Heuchelheim (DE)
(72) Erfinder: BIER, Volker, 35112 Fronhausen (DE)
(74) Vertreter: Qip Patentanwälte Dr. Kuehn & Partner mbB
(86) Internationale Anmeldenummer: PCT/EP2020/080224
(87) Internationale Veröffentlichungsnummer: WO 2022/089735

(56) Entgegenhaltungen:
- DE-A1-102014 013 384
- DE-A1-102017 129 212
- US-A1- 2008 244 895

## Beschreibung

### GEBIET DER ERFINDUNG

Die vorliegende Erfindung betrifft ein Verfahren und eine Vorrichtung zum Fügen einer Armierungshülse auf einen Rotor eines Elektromotors.

### HINTERGRUND DER ERFINDUNG

Rotoren von Elektromotoren können bei hohen Drehzahlen erheblichen Fliehkräften ausgesetzt sein. Insbesondere Rotoren, die aus mehreren Komponenten zusammengesetzt sind, müssen daher sehr stabil ausgeführt sein.

Zum Beispiel können Rotoren bestimmter Elektromotoren daran angebrachte Magnete aufweisen. Beispielsweise können bei einem Rotor mehrere Magnete typischerweise an einem achsenartigen Trägerkörper gehalten sein und dabei z.B. in Aufnahmetaschen des Trägerkörpers aufgenommen sein und/oder an dem Trägerkörper kraftschlüssig, formschlüssig und/oder stoffschlüssig angebracht sein. Dabei muss insbesondere verhindert werden, dass sich die Magnete und/oder andere Rotorkomponenten bei hohen Drehzahlen aufgrund von Fliehkräften lösen.

Es wurden Elektromotoren entwickelt, bei denen der Rotor durch eine Armierung stabilisiert wird. Die Armierung kann insbesondere als Hülse ausgebildet sein und zumindest Teilbereiche des Rotors ringförmig umgeben. Eine solche Armierungshülse kann auch als Bandage bezeichnet werden. Die Armierungshülse kann mit einem mechanisch hochbelastbaren Material wie beispielsweise einem kohlefaserverstärkten Kunststoff (CFK, englisch: carbon fibre reinforced plastics - CFRP) ausgebildet sein.

Herkömmlich werden Armierungshülsen auf Rotoren von Elektromotoren typischerweise aufgepresst oder aufgeschrumft. Die im Regelfall zylindrisch ausgebildete Armierungshülse weist mit ihrem Innenumfang ein gewisses Untermaß bezogen auf einen Außenumfang des Rotors auf, d.h., ein Innendurchmesser der Armierungshülse ist geringfügig kleiner als ein Außendurchmesser des Rotors. Die Armierungshülse wird bei der Fertigung des Elektromotors über den Rotor gepresst, sodass sie mit einer Presspassung drehfest auf dem Rotor sitzt. Während des Pressvorgangs wird die Armierungshülse dabei getrieben durch eine in Axialrichtung wirkende Kraft mit ihrer Innenoberfläche über die Außenoberfläche des Rotors bewegt.

US 2008/244895 A1 beschreibt ein Verfahren zum Montieren eines Magnetelements an einem Rotor zur Verwendung in einem Permanentmagnetmotor. DE 10 2017 129212 A1 beschreibt einen Rotor für einen Elektromotor mit einer Kühlung.

Es wurde beobachtet, dass es bei der Fertigung von Rotoren für Elektromotoren insbesondere beim Fügen einer Armierungshülse auf den Rotor zu Schädigungen an der Armierungshülse kommen kann.

### ZUSAMMENFASSUNG DER ERFINDUNG UND VORTEILHAFTER AUSFÜHRUNGSFORMEN

Es kann daher ein Bedarf an einem Verfahren sowie an einer Vorrichtung zum Fügen einer Armierungshülse auf einen Rotor eines Elektromotors bestehen, mithilfe derer insbesondere im Rahmen des Fügevorgangs bewirkte Schädigungen an der Armierungshülse vermieden werden können.

Einem solchen Bedarf kann mit dem Gegenstand der unabhängigen Ansprüche entsprochen werden. Vorteilhafte Ausführungsformen sind in den abhängigen Ansprüchen sowie der nachfolgenden Beschreibung und den begleitenden Figuren definiert.

Ein erster Aspekt der Erfindung betrifft ein Verfahren zum Fügen einer Armierungshülse auf einen Rotor eines Elektromotors. Das Verfahren umfasst zumindest folgende Schritte, vorzugsweise in der angegebenen Reihenfolge:
Bereitstellen der Armierungshülse und des Rotors, wobei die Armierungshülse einen zylindrischen Innenumfang aufweist, welcher bezogen auf einen zylindrischen Außenumfang des Rotors ein Untermaß aufweist;
Anbringen wenigstens zweier Vakuumsauger an einer äußeren Mantelfläche der Armierungshülse derart, dass die Vakuumsauger an der äußeren Mantelfläche der Armierungshülse aufgrund eines zwischen dem Vakuumsauger und der äußeren Mantelfläche generierten Vakuums reversibel lösbar anhaften; und
Fügen der Armierungshülse auf den Rotor, indem der Rotor in einer Pressrichtung in die Armierungshülse eingepresst wird, wobei in der Pressrichtung wirkende Kräfte von den Vakuumsaugern auf die Armierungshülse übertragen werden.

Ein zweiter Aspekt der Erfindung betrifft eine Vorrichtung zum Fügen einer Armierungshülse auf einen Rotor eines Elektromotors, wobei die Vorrichtung dazu konfiguriert ist, das Verfahren gemäß einer Ausführungsform des ersten Aspekts der Erfindung auszuführen. Es wird eine Vorrichtung beschrieben, die ein Presswerkzeug und wenigstens zwei Vakuumsauger aufweist. Das Presswerkzeug ist dazu konfiguriert, den Rotor und die Armierungshülse während eines Fügevorgangs, bei dem die Armierungshülse auf den Rotor gefügt wird, relativ zueinander in einer entgegengesetzten Pressrichtung zu verlagern. Die Vakuumsauger sind jeweils dazu konfiguriert, zwischen dem Vakuumsauger und einer äußeren Mantelfläche der Armierungshülse ein Vakuum zu generieren und hierdurch den Vakuumsauger reversibel lösbar an der äußeren Mantelfläche der Armierungshülse anzuhaften. Ferner sind das Presswerkzeug und/oder die Vakuumsauger derart konfiguriert, dass während des Fügevorgangs in der Pressrichtung wirkende Kräfte von den Vakuumsaugern auf die Hülse übertragen werden.

Ohne den Umfang der Erfindung in irgendeiner Weise zu beschränken, können Ideen und mögliche Merkmale zu Ausführungsformen der Erfindung unter anderem als auf den nachfolgend beschriebenen Gedanken und Erkenntnissen beruhend angesehen werden.

Wie einleitend bereits angemerkt, wurde beobachtet, dass bei einem herkömmlich durchgeführten Fügen einer Armierungshülse auf einen Rotor Schädigungen an der Armierungshülse bewirkt werden können. Herkömmlich wird die Armierungshülse auf den Rotor aufgepresst, indem mithilfe eines Presswerkzeugs, insbesondere eines Pressstempels, ein hoher Druck auf eine erste Stirnfläche der Armierungshülse ausgeübt wird. Um die Armierungshülse in axialer Richtung über den Rotor pressen zu können, müssen dabei sehr hohe Anpressdrücke auf die erste Stirnfläche der Armierungshülse ausgeübt werden. Eine axiale Presskraft ist hierbei typischerweise von den konstruktiven Hauptfaktoren (I) radiales Untermaß und (II) Länge der Hülse im Rotoreingriff abhängig. Werden die Presskräfte zu groß, kann es zu einer Schädigung der Armierungshülse am Angriffspunkt des Pressstempels an der Stirnfläche der Armierungshülse kommen.

Um die beobachtete Problematik zu entschärfen, wird vorgeschlagen, das Fügeverfahren geeignet zu modifizieren, sodass nicht mehr die gesamten zum Aufpressen der Armierungshülse notwendigen Kräfte auf die erste Stirnfläche der Armierungshülse ausgeübt werden. Zu diesem Zweck werden Vakuumsauger vorgesehen, mithilfe derer zumindest ein Teil der auf die Armierungshülse auszuübenden Kräfte anstatt auf die Stirnfläche auf eine Mantelfläche der Armierungshülse ausgeübt werden können. Die Vakuumsauger sind dabei derart konzipiert, dass sie an die äußere Mantelfläche der Armierungshülse angelegt werden können und zwischen sich und der äußeren Mantelfläche ein Vakuum, das heißt einen signifikanten Unterdruck, generieren können. Aufgrund dieses Vakuums haftet der Vakuumsauger an der Mantelfläche der Armierungshülse an, wobei diese mechanische Anbindung durch ein Belüften und somit Aufheben des Vakuums reversibel gelöst werden kann. Über die auf diese Weise an der Mantelfläche der Armierungshülse angebrachten Vakuumsauger können dann Kräfte auf die Armierungshülse übertragen werden, die das Fügen der Armierungshülse in der Pressrichtung auf den Rotor unterstützen. Die beim Fügen auf die erste Stirnfläche der Armierungshülse auszuübenden Kräfte können somit gesenkt werden und damit ein Risiko einer Beschädigung der ersten Stirnfläche reduziert werden.

Typischerweise ist eine Armierungshülse, die als Bandagierung für einen Rotor dienen soll und diesen gegenüber auf ihn und seine Komponenten wirkende Fliehkräfte stabilisieren soll, derart ausgebildet und dimensioniert, dass sie vor dem Fügen der Armierungshülse auf den Rotor an ihrem Innenumfang ein gewisses Untermaß bezogen auf den Außenumfang des Rotors aufweist. Ein solches Untermaß bedeutet, dass der Innenumfang der Armierungshülse geringfügig kleiner ist als der Außenumfang des Rotors. Der Innenumfang der Armierungshülse sowie der Außenumfang des Rotors sind hierbei im Allgemeinen zylindrisch, insbesondere kreiszylindrisch. Bei einer kreiszylindrischen Ausgestaltung bedeutet das Untermaß somit, dass der Radius bzw. Durchmesser am Innenumfang der Armierungshülse geringfügig kleiner, d.h. je nach Abmessungen der genannten Komponenten beispielsweise um 0,02 mm bis 0,1 mm kleiner, ist als der Radius bzw. Durchmesser am Außenumfang des Rotors. Aufgrund dieses Untermaßes kann einerseits die Armierungshülse nicht weitgehend kräftefrei auf den Rotor geschoben werden, sondern muss mit erheblichen, in axialer Richtung wirkenden Kräften auf den Rotor gepresst werden. Andererseits schafft die dabei bewirkte Presspassung, dass die Armierungshülse stabil und drehfest an dem Rotor fixiert ist. Dabei ist das Untermaß im Allgemeinen so gewählt, dass die Armierungshülse selbst bei thermisch bedingten Abmessungsänderungen des Rotors und/oder der Armierungshülse innerhalb eines vorgegebenen Betriebstemperaturbereichs stets mit einer ausreichenden Presspassung an dem Rotor gehalten ist. Mit anderen Worten sollte das Untermaß ausreichend groß gewählt werden, sodass selbst bei z.B. maximal tiefen Betriebstemperaturen eine thermisch bedingte Schrumpfung des Durchmessers des Rotors nicht dazu führt, dass sich die Presspassung zwischen dem Rotor und der Armierung löst.

Gemäß einer Ausführungsform weist die Armierungshülse eine Wandstärke von weniger als 2 mm, vorzugsweise weniger als 1 mm oder sogar weniger als 0,5 mm auf. Beispielsweise können sogar Armierungshülsen mit einer Wandstärke von lediglich 0,3 mm als ausreichend stabile Bandage für bestimmte Rotoren dienen.

Es wurde beobachtet, dass insbesondere Armierungshülsen mit geringer Wandstärke empfindlich auf Anpressdrücke, die auf eine ihrer Stirnflächen ausgeübt werden, reagieren können. Einerseits bietet die Stirnfläche einer dünnwandigen Armierungshülse wenig Fläche, um in Axialrichtung wirkende Kräfte in die Armierungshülse einleiten zu können, sodass sehr hohe Drücke wirken müssen. Andererseits weisen Armierungshülsen mit einer papierartig dünnen Wandung nur eine geringe Formstabilität in Axialrichtung auf, sodass sie bei axialem Druck bzw. Schub dazu neigen, sich zu deformieren oder sogar zu knicken. Insbesondere aus diesem Grund wurden bisher Armierungshülsen mit relativ dicker Wandung zum Bandagieren von Rotoren eingesetzt. Allerdings erhöhen solche dickwandigen Armierungshülsen sowohl einen Bauraum des letztlich gefertigten Rotors als auch dessen Gewicht und Trägheitsmoment. Ferner verursacht eine dickwandige Armierungshülse typischerweise eine Vergrößerung eines Luftspalts zwischen dem Rotor und einem Stator des Elektromotors, wodurch eine Effizienz des Elektromotors reduziert werden kann.

Mit dem hierin vorgestellten Fügeverfahren können auch sehr dünnwandige Armierungshülsen auf Rotoren gefügt werden. Durch das gezielte Übertragen von Kräften in der Pressrichtung mithilfe der an der Mantelfläche der Armierungshülse zuvor angehafteten Vakuumsauger können dabei die auf die sehr schmale Stirnfläche der dünnwandigen Armierungshülse zum Fügen auszuübenden Kräfte ausreichend gering gehalten werden oder in Extremfällen sogar gänzlich auf sie verzichtet werden, sodass Beschädigungen an der empfindlichen Stirnfläche vermieden werden können.

Gemäß einer Ausführungsform ist die Armierungshülse mit faserverstärktem, insbesondere kohlefaserverstärktem oder glasfaserverstärktem Kunststoff ausgebildet oder besteht aus diesem.

Armierungshülsen aus faserverstärktem Kunststoff können besonders mechanisch belastbar sein und somit als Bandagierung Rotoren besonders gut gegenüber Fliehkräften stabilisieren. In Kunststoff aufgenommene Kohlefasern, Glasfasern oder andere Fasern können hierbei zumindest teilweise in Umfangsrichtung der Armierungshülse verlaufen und dabei aufgrund ihrer sehr geringen Dehnfähigkeit den Rotor auch bei sehr hohen Drehzahlen zusammenhalten. Außerdem weist beispielsweise kohlefaserverstärkter Kunststoff oft einen sehr geringen thermischen Ausdehnungskoeffizienten, insbesondere einen thermischen Ausdehnungskoeffizienten nahe Null in Radialrichtung, auf, sodass eine daraus bestehende Armierungshülse auch bei hohen Betriebstemperaturen eine ausreichende Stabilisierung des bandagierten Rotors gewährleistet.

Allerdings wurde beobachtet, dass gerade Armierungshülsen aus kohlefaserverstärktem Kunststoff relativ empfindlich auf übermäßige, auf ihre Stirnfläche wirkende Anpressdrücke reagieren können.

Mit dem hierin vorgestellten Fügeverfahren können solche Anpressdrücke verringert werden und somit die Armierungshülse beim Fügen geschont werden.

Die Vakuumsauger, die mittels eines von ihnen generierten Unterdrucks an der äußeren Mantelfläche der Armierungshülse temporär angreifen sollen und über die in Pressrichtung wirkende Kräfte, die das Fügen der Armierungshülse unterstützen sollen, auf die Mantelfläche der Armierungshülse übertragen werden sollen, können in unterschiedlicher Weise angeordnet und ausgestaltet sein.

Dabei sollten die Vakuumsauger derart ausgestaltet und angeordnet sein, dass die von ihnen auf die Armierungshülse übertragenen, in Pressrichtung wirkenden Kräfte möglichst genau parallel zu der Pressrichtung auf die Armierungshülse wirken. Ansonsten könnten schräg zu der Pressrichtung auf die Armierungshülse wirkende Kräfte dazu führen, dass die Armierungshülse während des Fügevorgangs verkippt und/oder verkantet wird, wodurch der Fügevorgang gestört werden könnte.

Dementsprechend sollte ein einseitiges Angreifen von über einen einzelnen Vakuumsauger erzeugten Presskräften an der Armierungshülse im Regelfall vermieden werden, da hierdurch die Armierungshülse verkippt und/oder einem Drehmoment ausgesetzt würde. Stattdessen sollten bei dem vorgeschlagenen Fügeverfahren bzw. der hierfür eingesetzten Vorrichtung zumindest zwei Vakuumsauger vorgesehen sein. Die beiden Vakuumsauger können von gegenüberliegenden Seiten her an der äußeren Mantelfläche der Armierungshülse angreifen. Es können auch mehr als zwei Vakuumsauger vorgesehen sein. Insbesondere können die Vakuumsauger in einer spiegelsymmetrischen Anordnung um die äußere Mantelfläche der Armierungshülse herum angeordnet sein. Alternativ oder ergänzend können die Vakuumsauger in gleichmäßigen Abständen entlang des Umfangs um die Armierungshülse herum angeordnet sein. Zwei oder mehrere Vakuumsauger können dabei als jeweils separate Bauelemente ausgebildet sein, die beispielsweise von entgegengesetzten Seiten her an der Mantelfläche der Armierungshülse angelagert werden können. Alternativ ist auch vorstellbar, zwei oder mehrere Vakuumsauger in einem gemeinsamen Bauelement zu integrieren, sodass sie beispielsweise gemeinsam verlagert und/oder mit Vakuum beaufschlagt werden können.

Ferner können die Vakuumsauger in unterschiedlicher Weise strukturell und/oder funktional ausgebildet sein. Insbesondere können die Vakuumsauger dabei an Eigenschaften, insbesondere an eine Geometrie, der Armierungshülse angepasst sein, um mit dieser durch Erzeugen des Vakuums eine möglichst starke Haftverbindung eingehen zu können.

Beispielsweise können die Vakuumsauger gemäß einer Ausführungsform an einer zu der äußeren Mantelfläche der Armierungshülse gerichteten Seite eine zu der äußeren Mantelfläche der Armierungshülse komplementäre Kontur aufweisen.

Mit anderen Worten können die Vakuumsauger an einer Seite, die während des Fügeverfahrens hin zu der Armierungshülse gerichtet ist und die an der Mantelfläche der Armierungshülse angehaftet werden soll, eine Oberfläche aufweisen, deren Form im Wesentlichen komplementär zu der Form der Mantelfläche ist. Insbesondere kann diese Oberfläche eines Vakuumsaugers ein Segment einer Zylinderoberfläche bilden. Dabei kann diese Oberfläche einen im Wesentlichen gleichen Krümmungsradius wie der Krümmungsradius der Mantelfläche der Armierungshülse aufweisen. "Im Wesentlichen" kann in diesem Zusammenhang Abweichungen umfassen, die für die Funktion des Vakuumsaugers beim Anhaften an die Armierungshülse unerheblich sind. Beispielsweise können Abweichungen von bis zu 20% oder zumindest von bis zu 10 % bezogen auf die Krümmungsradien akzeptabel sein.

Dadurch, dass die Kontur des Vakuumsaugers komplementär zu derjenigen der Mantelfläche der Armierungshülse ist, kann der Vakuumsauger mit der entsprechenden Seite möglichst eng und dicht an die Mantelfläche der Armierungshülse angelegt werden. Hierdurch kann das zu erzeugende Vakuum zwischen dem Vakuumsauger und der Mantelfläche der Armierungshülse effizient und vorzugsweise ohne wesentliche Leckagen erzeugt werden. Letztendlich kann hierdurch der Vakuumsauger mit einer hohen Saugkraft an der Armierungshülse fixiert werden und somit können auch hohe Anpresskräfte in der Pressrichtung auf die Armierungshülse übertragen werden.

Gemäß einer Ausführungsform können die Vakuumsauger an einer zu der äußeren Mantelfläche der Armierungshülse gerichteten Seite eine ringsegment-förmige Kontur aufweisen.

Unter einer ringsegment-förmigen Kontur kann in diesem Fall verstanden werden, dass jeder der zwei oder mehr Vakuumsauger sich in Umfangsrichtung entlang eines Teilbereichs der Mantelfläche der Armierungshülse erstreckt, sodass die Summe aller Vakuumsauger sich ringförmig im Wesentlichen entlang des gesamten Umfangs der Mantelfläche der Armierungshülse herum erstreckt. Die Vakuumsauger können dabei die Mantelfläche der Armierungshülse entlang eines erheblichen Anteils (z.B. > 20 %), vorzugsweise entlang eines überwiegenden Anteils (d.h. > 50 %), insbesondere vorzugsweise entlang von mehr als 70% oder mehr als 90 %, des Umfangs der Mantelfläche kontaktieren und dabei an der Mantelfläche anhaften. Jeder einzelne Vakuumsauger kann dabei mit einer im Wesentlichen zylindersegment-förmigen Oberfläche an der Mantelfläche der Armierungshülse anliegen. Je größer die Anzahl von Vakuumsaugern ist, desto kleiner kann hierbei ein Winkelabschnitt einer von einem einzelnen Vakuumsauger überdeckten Kontaktfläche sein. Bei lediglich zwei Vakuumsaugern können sich diese beispielsweise jeweils entlang von bis zu 180° um den Umfang der Mantelfläche der Armierungshülse herum erstrecken und eine Kontaktfläche kann im Wesentlichen einer Hälfte einer Zylinderfläche entsprechen.

Gemäß einer Ausführungsform können die Vakuumsauger an einer zu der Armierungshülse gerichteten Seite eine reibungserhöhende Oberfläche aufweisen.

Unter einer reibungserhöhenden Oberfläche kann hierbei eine Oberfläche verstanden werden, die hinsichtlich ihrer Materialeigenschaften und/oder ihrer Oberflächenstruktur in spezieller Weise modifiziert wurde, um eine Reibung mit Bezug auf eine Gegenfläche, an der die Oberfläche anliegt, möglichst hoch zu gestalten.

Beispielsweise kann die reibungserhöhende Oberfläche im vorliegenden Fall mit einem Material gebildet oder beschichtet sein, welches einen hohen Reibungskoeffizienten bezogen auf das Material der zu kontaktierenden Oberfläche der Armierungshülse aufweist. Beispielsweise kann die reibungserhöhende Oberfläche mit einem flexiblen und/oder elastischen Material gebildet oder beschichtet sein. Als solche Materialien können beispielsweise Gummi, Kautschuk, Latex oder sonstige geeignete Elastomere eingesetzt werden.

Alternativ oder ergänzend kann die reibungserhöhende Oberfläche eine raue bzw. texturierte Struktur aufweisen, aufgrund derer bei Kontakt mit der Mantelfläche der Armierungshülse eine zwischen beiden Komponenten wirkende Reibung vergrößert wird. Beispielsweise kann die zu der Armierungshülse gerichtete Oberfläche des Vakuumsaugers durch geeignete Maßnahmen wie zum Beispiel Sandstrahlen oder Schleifen gezielt aufgeraut oder mit einer makroskopischen Textur wie zum Beispiel einer Rändelung versehen werden.

Aufgrund der durch die reibungserhöhende Oberfläche bewirkten hohen Reibung zwischen dem Vakuumsauger und der Armierungshülse können von den Vakuumsaugern besonders hohe Kräfte in der Pressrichtung, d.h. in einer Richtung, die im Wesentlichen parallel zu der Mantelfläche der Armierungshülse verläuft, auf die Armierungshülse übertragen werden und somit der Fügevorgangs unterstützt werden.

Gemäß einer Ausführungsform des hierin beschriebenen Fügeverfahrens können von den Vakuumsaugern auf die Armierungshülse übertragene Kräfte zeitlich oszillierend erzeugt werden. Gemäß einer Ausführungsform der hierin beschriebenen Fügevorrichtung kann diese hierzu einen Oszillationserzeuger aufweisen, welcher dazu konfiguriert ist, von den Vakuumsaugern auf die Armierungshülse übertragene Kräfte zeitlich oszillierend zu erzeugen.

Mit anderen Worten können die Vakuumsauger während des Verfahrens nicht lediglich statisch, d.h. zeitlich konstant, in der Pressrichtung und gegebenenfalls auch quer zu der Pressrichtung in einer Ansaugrichtung belastet werden und somit entsprechende statische Kräfte auf die Armierungshülse übertragen. Stattdessen können insbesondere unter Zuhilfenahme des Oszillationserzeugers die auf die Vakuumsauger wirkenden Kräfte zeitlich oszillieren, das heißt zeitlich variierend zu- und wieder abnehmen.

Dabei können die von den Vakuumsaugern auf die Armierungshülse übertragenen Kräfte in der Pressrichtung oszillieren. Alternativ oder ergänzend können die von den Vakuumsaugern auf die Armierungshülse übertragene Kräfte in einer Richtung quer zu der Pressrichtung, insbesondere in der Ansaugrichtung, d.h. orthogonal zu der Mantelfläche der Armierungshülse, oszillieren.

Mithilfe der oszillierenden Kräfte kann der Fügeprozess weiter unterstützt werden. Insbesondere können die von den Vakuumsaugern auf die Armierungshülse übertragenen oszillierenden Kräfte unterstützend wirken, wenn die Armierungshülse mit ihrem Innenumfang über den Außenumfang des Rotors bewegt werden soll. Die oszillierenden Kräfte können insbesondere helfen, ein geringfügiges Verkanten der Armierungshülse auf dem Rotor zu vermeiden bzw. sofort wieder zu lösen.

Gemäß einer Ausführungsform kann während des Fügeverfahrens zwischen eine Außenumfangsfläche des Rotors und eine Innenumfangsfläche der Armierungshülse eine Flüssigkeit eingebracht werden.

Eine derart eingebrachte Flüssigkeit kann beispielsweise eine Reibung zwischen der Außenumfangsfläche des Rotors und der Innenumfangsfläche der Armierungshülse während des Fügevorgangs reduzieren und somit die zum Fügen notwendigen Kräfte mindern. Bei der Flüssigkeit kann es sich um ein Schmiermittel handeln. Eventuell kann die Flüssigkeit derart gewählt sein, dass sie nach dem Fügevorgang mit der Zeit austrocknet oder aushärtet, sodass eine belastbare Fixierung der Armierungshülse auf dem Rotor bewirkt werden kann. Die Flüssigkeit kann auch als Klebe- oder Haftmittel, welches zumindest während einer Verarbeitungsphase flüssig ist, ausgestaltet sein.

Insbesondere wenn, wie bezüglich der vorangehend beschriebenen Ausführungsform erläutert, während des Fügens der Armierungshülse auf den Rotor zeitlich oszillierend Kräfte übertragen werden, kann das zusätzliche Einbringen einer Flüssigkeit zwischen die Armierungshülse und den Rotor den Fügevorgangs vereinfachen.

Gemäß einer weiteren Ausführungsform des beschriebenen Fügeverfahrens kann der Rotor vor dem Fügen gekühlt werden.

Durch ein vorab durchgeführtes Abkühlen des Rotors auf eine erheblich niedrigere Temperatur kann der Rotor aufgrund der damit einhergehenden thermisch bedingten Schrumpfung signifikant geringere Abmessungen, insbesondere einen verkleinerten Querschnitt, einnehmen. Beispielsweise kann der Rotor in Bezug auf eine Anfangstemperatur bzw. eine Umgebungstemperatur um mehr als 10 °C, vorzugsweise mehr als 20 °C, mehr als 50 °C oder sogar mehr als 100 °C abgekühlt werden. In einem solchen abgekühlten Zustand kann dann die Armierungshülse einfacher, d.h. insbesondere mit geringeren Kräften, auf den Rotor gefügt werden. Neben einer Presspassung (englisch: press fit) kann es dabei auch zu einer Schrumpfpassung (englisch: shrink fit) der Armierungshülse auf dem Rotor kommen.

Eventuell kann neben dem Rotor auch die Armierungshülse vorab abgekühlt werden. Dabei kann gegebenenfalls vorteilhaft genutzt werden, dass ein für die Armierungshülse verwendeter kohlefaserverstärkter Kunststoff typischerweise keine oder eine erheblich geringere thermisch bedingte Schrumpfung aufweist als die üblicherweise in dem Rotor eingesetzten Materialien, insbesondere metallische Material.

Es wird darauf hingewiesen, dass mögliche Merkmale und Vorteile von Ausführungsformen der Erfindung hierin teils mit Bezug auf ein Verfahren zum Fügen einer Armierungshülse auf einen Rotor eines Elektromotors und teils mit Bezug auf eine Vorrichtung, die speziell dazu konfiguriert ist, ein solches Verfahren auszuführen, beschrieben sind. Ein Fachmann wird erkennen, dass die für einzelne Ausführungsformen beschriebenen Merkmale in analoger und geeigneter Weise auf andere Ausführungsformen übertragen, angepasst und/oder ausgetauscht werden können, um zu weiteren Ausführungsformen der Erfindung und möglicherweise zu Synergieeffekten zu gelangen.

### KURZE BESCHREIBUNG DER ZEICHNUNGEN

Nachfolgend werden vorteilhafte Ausführungsformen der Erfindung unter Bezugnahme auf die beigefügten Zeichnungen weiter erläutert, wobei weder die Zeichnungen noch die Erläuterungen als die Erfindung in irgendeiner Weise einschränkend auszulegen sind.
Figur 1 zeigt einen Längsschnitt durch eine Vorrichtung zum Fügen einer Armierungshülse auf einen Rotor eines Elektromotors gemäß einer Ausführungsform der vorliegenden Erfindung.
Figur 2 zeigt eine perspektivische Ansicht auf einen beispielhaften Vakuumsauger für eine Vorrichtung gemäß einer Ausführungsform der vorliegenden Erfindung.
Figur 3 zeigt einen Querschnitt durch eine Vorrichtung gemäß einer Ausführungsform der vorliegenden Erfindung.
Figur 4 zeigt einen Querschnitt durch eine Vorrichtung gemäß einer weiteren Ausführungsform der vorliegenden Erfindung.

Die Figuren sind lediglich schematisch und nicht maßstabsgetreu. Gleiche Bezugszeichen bezeichnen in den verschiedenen Zeichnungen gleiche bzw. gleichwirkende Merkmale.

### BESCHREIBUNG VON VORTEILHAFTEN AUSFÜHRUNGSFORMEN

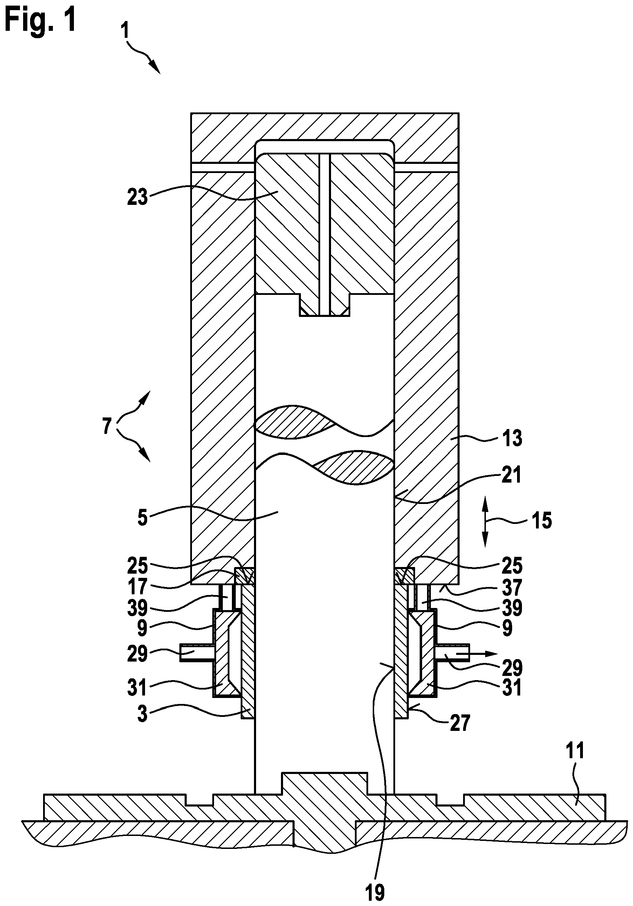

Figur 1 zeigt eine erfindungsgemäße Vorrichtung 1 zum Fügen einer Armierungshülse 3 auf einen Rotor 5 eines Elektromotors. Die Armierungshülse 3 ist in diesem Fall kreiszylindrisch ausgebildet, weist eine geringe Wandstärke von beispielsweise weniger als 0,5 mm auf und besteht aus kohlefaserverstärktem Kunststoff. Die Armierungshülse 3 soll derart auf den länglichen Rotor 5 gefügt werden, dass sie einen Außenumfang des Rotors 5 in einer Presspassung umgibt. Der aus mehreren Komponenten zusammengesetzte Rotor 5 wird von der Armierungshülse 3 somit in radialer Richtung bandagiert und stabilisiert.

Die Vorrichtung 1 umfasst ein Presswerkzeug 7 sowie zwei Vakuumsauger 9. Das Presswerkzeug 7 kann während eines Fügevorgangs die Armierungshülse 3 und den Rotor 5 jeweils in entgegengesetzte Pressrichtungen 15 drücken und somit relativ zueinander verlagern. Im dargestellten Beispiel wird der Rotor 5 sowie ein darüber angeordneter Konus 23 hierzu stehend auf einer Basisplatte 11 gehalten, während ein Pressstempel 13 des Presswerkzeugs 7 die Armierungshülse 3 von oben kommend in einer Pressrichtung 15 parallel zu einer axialen Richtung des Rotors 5 nach unten über den Rotor 5 schiebt. Der Pressstempel 13 drückt hierzu mit einer unteren Stirnfläche 37 auf einen Pressring 17. Der Pressring 17 wiederum drückt auf eine obere Stirnfläche 25 der Armierungshülse 3 und schiebt diese somit mit ihrer Innenumfangsfläche 19 in der Pressrichtung 15 sukzessive entlang einer Außenumfangsfläche 21 des Rotors 5. Die Armierungshülse 3 wird hierbei an ihrer oberen Stirnfläche 25 mechanisch stark belastet.

Um die Armierungshülse 3 nicht ausschließlich aufgrund des über den Pressring 17 auf ihre obere Stirnfläche 25 ausgeübten Drucks über den Rotor 5 fügen zu müssen, verfügt die Vorrichtung 1 ferner über wenigstens zwei Vakuumsauger 9. Die Vakuumsauger 9 sind dazu ausgelegt, zwischen sich und einer äußeren Mantelfläche 27 der Armierungshülse 3 einen Unterdruck zu generieren und sich somit reversibel lösbar an die Mantelfläche 27 der Armierungshülse 3 anzusaugen. Die Vakuumsauger 9 können hierzu beispielsweise über hohle Absaugleitungen 29 an einer Pumpe (nicht dargestellt) angeschlossen sein, über welche das gewünschte Vakuum erzeugt wird.

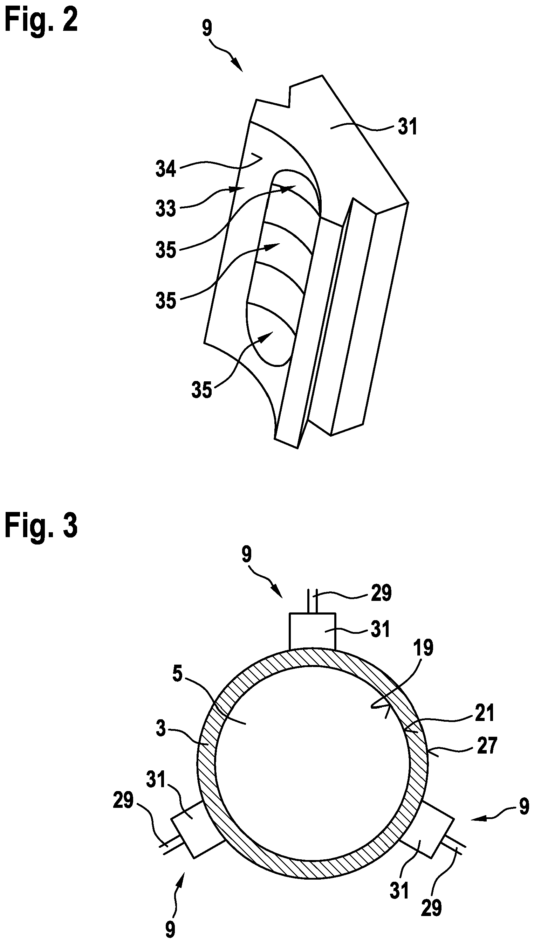

In Figur 2 ist beispielhaft ein Saugelement 31 eines solchen Vakuumsaugers 9 dargestellt. Das Saugelement 31 des Vakuumsaugers 9 weist an einer zu der äußeren Mantelfläche 27 der Armierungshülse 3 gerichteten Seite 33 eine zu der äußeren Mantelfläche 27 der Armierungshülse 3 komplementäre Kontur auf. Im dargestellten Beispiel ist diese Seite 33 als Segment einer Zylinderoberfläche ausgestaltet, sodass sich das Saugelement 31 an die zylindrische äußere Mantelfläche 27 der Armierungshülse komplementär anschmiegen kann. Zumindest an der zu der Armierungshülse 3 gerichteten Seite 33 kann das Saugelement 31 aus einem flexiblen, beispielsweise gummiartigen Material bestehen. In einem Zentrum dieser Seite 33 weist das Saugelement 31 mehrere Ansaugöffnungen 35 auf, aus welchen Luft beispielsweise über eine damit verbundene Absaugleitung 29 abgesaugt werden kann und somit das gewünschte Vakuum zwischen dem Saugelement 31 des Vakuumsaugers 9 und der Armierungshülse 3 erzeugt werden kann. Ferner kann die zu der Armierungshülse 3 gerichtete Seite 33 eine reibungserhöhende Oberfläche aufweisen, beispielsweise indem diese Oberfläche aufgeraut oder mit einer makroskopischen Textur versehen wird.

Um die Vorrichtung 1 nun beim Fügen der Armierungshülse 3 auf den Rotor 5 zu unterstützen, sind das Presswerkzeug 7 und/oder die Vakuumsauger 9 derart konfiguriert, dass während des Fügevorgangs in der Pressrichtung 15 wirkende Kräfte von den Vakuumsaugern 9 auf die Armierungshülse 3 übertragen werden. Bei dem in Figur 1 dargestellten Beispiel stützen sich hierzu die beiden Saugelemente 31 der Vakuumsauger 9 mithilfe von Stützstrukturen 39 an der unteren Stirnfläche 37 des Pressstempels 13 ab. Dementsprechend presst der Pressstempel 13 nicht nur den Pressring 17 und über diesen die obere Stirnfläche 25 der Armierungshülse 3 in der Pressrichtung 15 nach unten, sondern auch die beiden Vakuumsauger 9 und über diese die äußere Mantelfläche 27 der Armierungshülse 3.

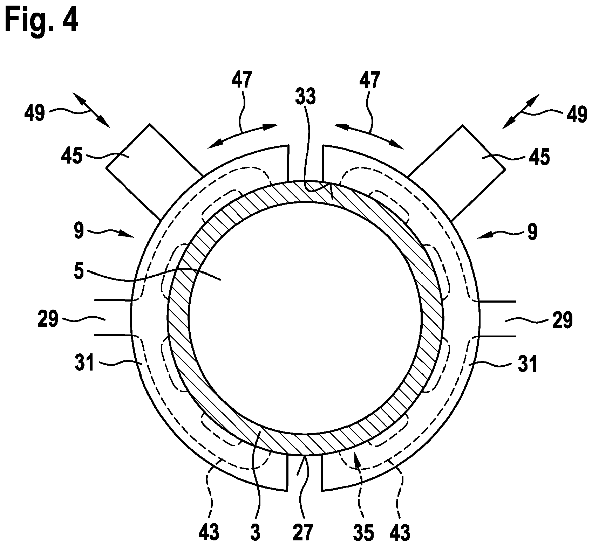

In den Figuren 3 und 4 sind Querschnittsansichten zweier möglicher Ausgestaltungen, wie die Vakuumsauger 9 geformt sein können, an der Armierungshülse 3 angeordnet sein können und mit der Armierungshülse 3 zusammenwirken können, dargestellt.

Bei der in Figur 3 dargestellten Ausgestaltung sind die Saugelemente 31 der Vakuumsauger 9 verhältnismäßig klein und kastenartig ausgebildet. Dementsprechend kontaktieren die Vakuumsauger 9 die äußere Mantelfläche 27 der Armierungshülse 3 lediglich quasi punktuell bzw. an relativ kleinen Flächen bezogen auf eine Gesamtfläche der Mantelfläche 27. In dem Beispiel sind drei Vakuumsauger 9 vorgesehen, die äquidistant entlang des Umfangs der Mantelfläche 27 angeordnet sind.

Bei der in Figur 4 dargestellten Ausgestaltung sind die Saugelemente 31 mit einer ringsegment-förmigen Kontur ausgebildet. Es sind lediglich zwei Vakuumsauger 9 vorgesehen. Dabei schmiegt sich jedes der beiden Saugelemente 31 mit seiner zu der Armierungshülse 3 gerichteten Seite 33, welche annähernd eine Hälfte einer Zylinderoberfläche bildet, an die zylindrische äußere Mantelfläche 27 der Armierungshülse 3. In dem Saugelement 31 können dabei Kanäle 43 vorgesehen sein (gestrichelt dargestellt), über welche mehrere Ansaugöffnungen 35 mit der jeweiligen Absaugleitung 29 verbunden sind, sodass durch Erzeugen eines Unterdrucks das Saugelement 31 an die Armierungshülse 3 angehaftet werden kann.

Wie in Figur 4 lediglich sehr schematisch angedeutet, kann die Vorrichtung 1 ergänzend über einen Oszillationserzeuger 45 verfügen. Dieser Oszillationserzeuger 45 kann bewirken, dass die Vakuumsauger 9 oszillierenden Kräften ausgesetzt sind und diese wiederum auf die Armierungshülse 3 übertragen. Die oszillierenden Kräfte können in verschiedenen Richtungen wirken. Beispielhaft sind in Figur 4 Kräfte angedeutet, die in Umfangsrichtung 47 und/oder in radialer Richtung 49 drücken, wobei auch Kräfte, die in axialer Richtung (d.h. in Figur 4 orthogonal zur Bildebene) wirken, von den Oszillationserzeugern 45 auf die jeweiligen Saugelemente 31 der Vakuumsauger 9 übertragen werden können. Aufgrund der oszillierenden Kräfte kann der Fügevorgang unterstützt werden.

Abschließend wird darauf hingewiesen, dass Begriffe wie "aufweisend", "umfassend" etc. keine anderen Elemente oder Schritte ausschließen und Begriffe wie "eine" oder "ein" keine Vielzahl ausschließen. Ferner wird darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### BEZUGSZEICHENLISTE

- 1: Vorrichtung
- 3: Armierungshülse
- 5: Rotor
- 7: Presswerkzeug
- 9: Vakuumsauger
- 11: Basisplatte
- 13: Pressstempel
- 15: Pressrichtung
- 17: Pressring
- 19: Innenumfangsfläche der Armierungshülse
- 21: Außenumfangsfläche des Rotors
- 23: Konus
- 25: obere Stirnfläche der Armierungshülse
- 27: äußeren Mantelfläche der Armierungshülse
- 29: Absaugleitung
- 31: Saugelement
- 33: zur Armierungshülse gerichtete Seite des Vakuumsaugers
- 34: reibungserhöhende Oberfläche
- 35: Ansaugöffnungen
- 37: untere Stirnfläche des Pressstempels
- 39: Stützstruktur
- 43: Kanal
- 45: Oszillationserzeuger
- 47: Umfangsrichtung
- 49: radiale Richtung

## Patentansprüche

1. Verfahren zum Fügen einer Armierungshülse (3) auf einen Rotor (5) eines Elektromotors, wobei das Verfahren umfasst:
Bereitstellen der Armierungshülse (3) und des Rotors (5), wobei die Armierungshülse (5) einen zylindrischen Innenumfang aufweist,
**dadurch gekennzeichnet, dass**
die Armierungshülse (5) einen zylindrischen Innenumfang aufweist, welcher bezogen auf einen zylindrischen Außenumfang des Rotors (5) ein Untermaß aufweist;
und das Verfahren ferner aufweist:
Anbringen wenigstens zweier Vakuumsauger (9) an einer äußeren Mantelfläche (27) der Armierungshülse (3) derart, dass die Vakuumsauger (9) an der äußeren Mantelfläche (27) der Armierungshülse (3) aufgrund eines zwischen dem Vakuumsauger (9) und der äußeren Mantelfläche (27) generierten Vakuums reversibel lösbar anhaften; und
Fügen der Armierungshülse (3) auf den Rotor (5), indem der Rotor (5) in einer Pressrichtung (15) in die Armierungshülse (3) eingepresst wird, wobei in der Pressrichtung (15) wirkende Kräfte von den Vakuumsaugern (9) auf die Armierungshülse (3) übertragen werden.

2. Verfahren nach Anspruch 1,
wobei die Armierungshülse (3) eine Wandstärke von weniger als 2 mm aufweist.

3. Verfahren nach einem der vorhergehenden Ansprüche,
wobei die Armierungshülse (3) mit faserverstärktem, insbesondere kohlefaserverstärktem oder glasfaserverstärktem Kunststoff ausgebildet ist.

4. Verfahren nach einem der vorhergehenden Ansprüche,
wobei die Vakuumsauger (9) an einer zu der äußeren Mantelfläche (27) der Armierungshülse (3) gerichteten Seite (33) eine zu der äußeren Mantelfläche (27) der Armierungshülse (3) komplementäre Kontur aufweisen.

5. Verfahren nach einem der vorhergehenden Ansprüche,
wobei die Vakuumsauger (9) an einer zu der äußeren Mantelfläche (27) der Armierungshülse (3) gerichteten Seite (33) eine ringsegment-förmige Kontur aufweisen.

6. Verfahren nach einem der vorhergehenden Ansprüche,
wobei die Vakuumsauger (9) an einer zu der Armierungshülse (3) gerichteten Seite (33) eine reibungserhöhende Oberfläche (34) aufweisen.

7. Verfahren nach einem der vorhergehenden Ansprüche,
wobei von den Vakuumsaugern (9) auf die Armierungshülse (3) übertragene Kräfte zeitlich oszillierend erzeugt werden.

8. Verfahren nach einem der vorhergehenden Ansprüche,
wobei zwischen einer Außenumfangsfläche (21) des Rotors (5) und einer Innenumfangsfläche (19) der Armierungshülse (3) eine Flüssigkeit eingebracht wird.

9. Verfahren nach einem der vorhergehenden Ansprüche,
wobei der Rotor (5) vor dem Fügen gekühlt wird.

10. Vorrichtung (1) zum Fügen einer Armierungshülse (3) auf einen Rotor (5) eines Elektromotors, wobei die Vorrichtung (1) dazu konfiguriert ist, das Verfahren gemäß einem der vorherigen Ansprüche auszuführen, wobei die Vorrichtung (1) aufweist:
ein Presswerkzeug (7), welches dazu konfiguriert ist, den Rotor (5) und die Armierungshülse (3) während eines Fügevorgangs, bei dem die Armierungshülse (3) auf den Rotor (5) gefügt wird, relativ zueinander in einer entgegengesetzten Pressrichtung (15) zu verlagern,
wenigstens zwei Vakuumsauger (9), welche jeweils dazu konfiguriert sind, zwischen dem Vakuumsauger (9) und einer äußeren Mantelfläche (27) der Armierungshülse (3) ein Vakuum zu generieren und hierdurch den Vakuumsauger (9) reversibel lösbar an der äußeren Mantelfläche (27) der Armierungshülse (3) anzuhaften,
wobei das Presswerkzeug (7) und/oder die Vakuumsauger (9) derart konfiguriert sind, dass während des Fügevorgangs in der Pressrichtung (15) wirkende Kräfte von den Vakuumsaugern (9) auf die Armierungshülse (3) übertragen werden.

11. Vorrichtung nach Anspruch 10, wobei die Vakuumsauger (9) an einer zu der äußeren Mantelfläche (27) der Armierungshülse (3) gerichteten Seite (33) eine zu der äußeren Mantelfläche (27) der Armierungshülse (3) komplementäre Kontur aufweisen.

12. Vorrichtung nach Anspruch 10 oder 11, wobei die Vakuumsauger (9) an einer zu der äußeren Mantelfläche (27) der Armierungshülse (3) gerichteten Seite (33) eine ringsegment-förmige Kontur aufweisen.

13. Vorrichtung nach einem der Ansprüche 10 bis 12, wobei die Vakuumsauger (9) an einer zu der Armierungshülse (3) gerichteten Seite (33) eine reibungserhöhende Oberfläche (34) aufweisen.

14. Vorrichtung nach einem der Ansprüche 10 bis 13, ferner aufweisend einen Oszillationserzeuger (45), welcher dazu konfiguriert ist, von den Vakuumsaugern (9) auf die Armierungshülse (3) übertragene Kräfte zeitlich oszillierend zu erzeugen.

## Claims

1. Method for joining a reinforcement sleeve (3) onto a rotor (5) of an electric motor, wherein the method comprises:
providing the reinforcement sleeve (3) and the rotor (5), wherein the reinforcement sleeve (5) has a cylindrical inner periphery,
**characterized in that**
the reinforcement sleeve (5) has a cylindrical inner periphery which is undersized with respect to a cylindrical outer periphery of the rotor (5);
and the method further comprises:
attaching at least two vacuum cups (9) onto an outer lateral surface (27) of the reinforcement sleeve (3), such that the vacuum cups (9) adhere to the outer lateral surface (27) of the reinforcement sleeve (3) in a reversibly detachable manner on account of a vacuum generated between the vacuum cup (9) and the outer lateral surface (27); and
joining the reinforcement sleeve (3) onto the rotor (5), **in that** the rotor (5) is pressed into the reinforcement sleeve (3) in a pressing direction (15), wherein forces acting in the pressing direction (15) are transferred from the vacuum cups (9) to the reinforcement sleeve (3).

2. Method according to claim 1,
wherein the reinforcement sleeve (3) has a wall thickness of less than 2 mm.

3. Method according to any of the preceding claims,
wherein the reinforcement sleeve (3) is formed using fiber-reinforced, in particular carbon fiber-reinforced or glass fiber-reinforced, plastics material.

4. Method according to any of the preceding claims,
wherein the vacuum cups (9) have a contour complementary to the outer lateral surface (27) of the reinforcement sleeve (3), on a side (33) facing the outer lateral surface (27) of the reinforcement sleeve (3).

5. Method according to any of the preceding claims,
wherein the vacuum cups (9) have an annular segment-shaped contour on a side (33) facing the outer lateral surface (27) of the reinforcement sleeve (3).

6. Method according to any of the preceding claims,
wherein the vacuum cups (9) have a friction-enhancing surface (34) on a side (33) facing the reinforcement sleeve (3).

7. Method according to any of the preceding claims,
wherein forces transferred from the vacuum cups (9) to the reinforcement sleeve (3) are generated in a temporally oscillating manner.

8. Method according to any of the preceding claims,
wherein a liquid is introduced between an outer peripheral surface (21) of the rotor (5) and an inner peripheral surface (19) of the reinforcement sleeve (3).

9. Method according to any of the preceding claims,
wherein the rotor (5) is cooled prior to joining.

10. Device (1) for joining a reinforcement sleeve (3) onto a rotor (5) of an electric motor, wherein the device (1) is designed to carry out the method according to any of the preceding claims, wherein the device (1) comprises:
a pressing tool (7), which is designed to displace the rotor (5) and the reinforcement sleeve (3) relative to one another, in an opposing pressing direction (15), during a joining process in which the reinforcement sleeve (3) is joined onto the rotor (5), at least two vacuum cups (9), which are in each case designed to generate a vacuum between the vacuum cup (9) and an outer lateral surface (27) of the reinforcement sleeve (3) and to thereby cause the vacuum cup (9) to adhere to the outer lateral surface (27) of the reinforcement sleeve (3) in a reversibly detachable manner,
wherein the pressing tool (7) and/or the vacuum cups (9) are designed such that, during the joining process, forces acting in the pressing direction (15) are transferred from the vacuum cups (9) to the reinforcement sleeve (3).

11. Device according to claim 10,
wherein the vacuum cups (9) have a contour complementary to the outer lateral surface (27) of the reinforcement sleeve (3), on a side (33) facing the outer lateral surface (27) of the reinforcement sleeve (3).

12. Device according to any of claims 10 or 11,
wherein the vacuum cups (9) have an annular segment-shaped contour on a side (33) facing the outer lateral surface (27) of the reinforcement sleeve (3).

13. Device according to any of claims 10 to 12,
wherein the vacuum cups (9) have a friction-enhancing surface (34) on a side (33) facing the reinforcement sleeve (3).

14. Device according to any of claims 10 to 13,
further comprising an oscillation generator (45) which is designed to generate forces, transferred from the vacuum cups (9) to the reinforcement sleeve (3), in a temporally oscillating manner.

## Revendications

1. Procédé d'assemblage d'un manchon de renforcement (3) sur un rotor (5) d'un moteur électrique, le procédé comprenant de :
fournir le manchon de renforcement (3) et le rotor (5), le manchon de renforcement (5) présentant une circonférence intérieure cylindrique,
**caractérisé en ce que**
le manchon de renforcement (5) présente une circonférence intérieure cylindrique qui est sous-dimensionnée par rapport à une circonférence extérieure cylindrique du rotor (5) ;
et le procédé comportant en outre de :
placer au moins deux ventouses à vide (9) sur une surface d'enveloppe extérieure (27) du manchon de renforcement (3) de telle sorte que les ventouses à vide (9) adhèrent de manière détachable et réversible à la surface d'enveloppe extérieure (27) du manchon de renforcement (3) en raison d'un vide généré entre la ventouse à vide (9) et la surface d'enveloppe extérieure (27) ; et
assembler le manchon de renforcement (3) sur le rotor (5) en pressant le rotor (5) dans le manchon de renforcement (3) dans une direction de pressage (15), des forces agissant dans la direction de pressage (15) étant transmises au manchon de renforcement (3) par les ventouses à vide (9).

2. Procédé selon la revendication 1,
dans lequel le manchon de renforcement (3) présente une épaisseur de paroi inférieure à 2 mm.

3. Procédé selon l'une des revendications précédentes,
dans lequel le manchon de renforcement (3) est réalisé avec une matière plastique renforcée par des fibres, en particulier des fibres de carbone ou des fibres de verre.

4. Procédé selon l'une des revendications précédentes,
dans lequel les ventouses à vide (9) présentent, sur un côté (33) orienté vers la surface d'enveloppe extérieure (27) du manchon de renforcement (3), un contour complémentaire à la surface d'enveloppe extérieure (27) du manchon de renforcement (3).

5. Procédé selon l'une des revendications précédentes,
dans lequel les ventouses à vide (9) présentent un contour en forme de segment d'anneau sur un côté (33) orienté vers la surface d'enveloppe extérieure (27) du manchon de renforcement (3).

6. Procédé selon l'une des revendications précédentes,
dans lequel les ventouses à vide (9) présentent une surface (34) augmentant la friction sur un côté (33) orienté vers le manchon de renforcement (3).

7. Procédé selon l'une des revendications précédentes,
dans lequel des forces transmises au manchon de renforcement (3) par les ventouses à vide (9) sont générées de manière oscillante dans le temps.

8. Procédé selon l'une des revendications précédentes,
dans lequel un liquide est introduit entre une surface circonférentielle extérieure (21) du rotor (5) et une surface circonférentielle intérieure (19) du manchon de renforcement (3).

9. Procédé selon l'une des revendications précédentes,
dans lequel le rotor (5) est refroidi avant l'assemblage.

10. Dispositif (1) d'assemblage d'un manchon de renforcement (3) sur un rotor (5) d'un moteur électrique, le dispositif (1) étant configuré pour mettre en œuvre le procédé selon l'une des revendications précédentes, le dispositif (1) présentant :
un outil de pressage (7) qui est configuré pour déplacer le rotor (5) et le manchon de renforcement (3) l'un par rapport à l'autre dans une direction de pressage opposée (15) pendant une opération d'assemblage lors de laquelle le manchon de renforcement (3) est assemblé sur le rotor (5),
au moins deux ventouses à vide (9) qui sont configurées chacune pour générer un vide entre la ventouse à vide (9) et une surface d'enveloppe extérieure (27) du manchon de renforcement (3) et pour faire adhérer ainsi de manière détachable et réversible la ventouse à vide (9) à la surface d'enveloppe extérieure (27) du manchon de renforcement (3), l'outil de pressage (7) et/ou les ventouses à vide (9) étant configurés de telle sorte que des forces agissant dans la direction de pressage (15) pendant l'opération d'assemblage sont transmises au manchon de renforcement (3) par les ventouses à vide (9).

11. Dispositif selon la revendication 10,
dans lequel les ventouses à vide (9) présentent, sur un côté (33) orienté vers la surface d'enveloppe extérieure (27) du manchon de renforcement (3), un contour complémentaire à la surface d'enveloppe extérieure (27) du manchon de renforcement (3).

12. Dispositif selon la revendication 10 ou 11,
dans lequel les ventouses à vide (9) présentent un contour en forme de segment d'anneau sur un côté (33) orienté vers la surface d'enveloppe extérieure (27) du manchon de renforcement (3).

13. Dispositif selon l'une des revendications 10 à 12,
dans lequel les ventouses à vide (9) présentent une surface (34) augmentant la friction sur un côté (33) orienté vers le manchon de renforcement (3).

14. Dispositif selon l'une des revendications 10 à 13,
comportant en outre un générateur d'oscillations (45) qui est configuré pour générer de manière oscillante dans le temps des forces transmises au manchon de renforcement (3) par les ventouses à vide (9).
